# EUROPEAN PATENT SPECIFICATION

(11) **EP 2 718 631 B1**
(45) Date of publication and mention of the grant of the patent: **05.08.2020**
(21) Application number: 12731606.5
(22) Date of filing: 24.05.2012
(51) Int. Cl.: F24D 17/00, F28D 1/03, F28D 9/00, F28D 21/00, E03C 1/00, A47K 3/28, F24D 19/10, G05D 23/19

(54) **AN ELECTRIC SHOWER**
ELEKTRISCHE DUSCHE
DOUCHE ÉLECTRIQUE

(30) Priority: 24.05.2011 GB 201108705
(43) Date of publication of application: 16.04.2014
(73) Proprietor: Fuller, Peter Joe, Salisbury, Wiltshire SP2 8EA (GB); Fuller, Edmund Thomas, Christchurch (NZ)
(72) Inventor: FULLER, Edmund Thomas, Christchurch (NZ)
(74) Representative: Brown, Michael Stanley
(86) International application number: PCT/GB2012/000458
(87) International publication number: WO 2012/160330

(56) References cited:
- WO-A1-2010/088784
- CN-A- 101 822 502
- GB-A- 2 416 829
- US-A1- 2011 094 708

## Description

### Field of the Invention

This invention relates to electric showers.

### Background to the Invention

The rationale behind recovering waste heat, reducing energy consumption and the associated cost savings and environmental benefits are well established. The idea of recovering waste heat used for domestic purposes is not new and there are a number of devices aimed at heat recovery from a domestic shower. An example of prior art is provided by US Patent 4300247 dated Nov 17 1981, which has the following serious deficiencies:-

The heat exchange surface exposed to the gray/used shower water cannot be cleaned without disassembly, using special tools, or mechanism within the heat exchange system.

The heat exchange components are bulky and have a relatively high thermal mass. Consequently there is an extended warm up period where energy is absorbed before efficient heat transfer is established. This heat is then lost to the environment at the end of the shower period.

The heat exchange components are complex and use significant raw materials resulting in high installation costs and subsequently a poor economic return.

The heat recovery system that is employed heats the cold water feed before mixing this with hot water to attain the desired shower temperature. This results in the quantity of cold water to be warmed being significantly lower than the total water flow through the shower from which heat is to be removed. Consequently, the heat recovery is compromised and the efficiency of such systems is low.

Heat recovery systems when used to return heat from the waste water flow back to the shower in use do not have a control system capable of delivering a stable shower temperature, given the positive feedback inherent in such arrangements.

The use of the shower requires some knowledge or limited training of the user making it unsatisfactory in many applications where compliance would be a problem, i.e. sports clubs and hotels. Turning the shower temperature down to provide a cold shower once the shower has been run on hot can be difficult or take excessive time.

In British Patent Specification No. 2416829 describes the features of the preamble of claim 1.

It is an object of the present invention to provide an electric shower that overcomes the deficiencies of the prior art.

### Summary of the Invention

According to the present invention there is provided an electric shower as claimed in Claim 1.

An important advantage of the present invention is that the water being discharged from the shower head serves to effect an improved degree of preheating of the cold water supply before it reaches the heater.

The water flows in a single circuit to the drain to leave the shower enclosure. This is important as prior art energy recovery showers specify the preheating of incoming cold water to the shower before mixing this with separately supplied hot water (usually from a tank) to give the desired shower temperature.

Under these conditions the flow of cold water through the heat exchanger is restricted particularly if the hot water temperature is low or the shower is warming up. This low flow of cold feed water reduces the performance of the heat exchanger. With the shower of the present invention all of the water supplied is cold water and all of that water passes through the heat exchange tray. Consequently the flow of cold water will always be as high as possible and inherently matches the flow of the warm shower waste going to drain and thus allows for the optimum performance of the heat exchange system.

It is to be noted that the thinner the material of the plate heat exchanger, the lower the cost of the material used, the more efficient the heat transfer and the lower the thermal inertia (the time and energy lost while the shower warms up). Therefore there is an incentive to make the heat transfer element as thin as possible. The total area of the heat exchanger tray is significant as it is directly proportional to the size of the force being generated between the upper and lower plates of the heat exchanger by the pressure of the supply water contained therein. This may be overcome in a comparable application by securing the plates to each other at regular intervals. This is customarily achieved by spot welding the plates together at periodic intervals. This approach tends to leave depressions/marks and some distortion on the surface of the tray reducing the cosmetic appeal and ease of cleaning. Soldering, brazing or the use of an adhesive are all possible methods of securing the upper and lower shells of the heat exchanger together but result in greater complexity in manufacture and a less satisfactory result. What is proposed in this invention is to have a low pressure heat exchange tray the two halves of which do not need to be secured except at their edges. The lower and upper halves or 'shells' of the heat exchanger are 'sprung' in compression together while being secured and sealed together at the outer and inner edges during manufacture. It is necessary to restrict the maximum inlet water pressure with a pressure reducing device so that the internal pressure within the heat exchanger is typically less than 1bar.

It is envisaged that the internal clearance between the upper and lower surfaces of the tray will be maintained by the upper and lower surfaces being pressed together against raised dimples or ridges pressed into the lower surface during manufacture. Alternatively, a spacing assembly, mesh or the like may be used and "sandwiched" between the upper and lower plates.

In addition where appropriate, it is possible to effect contouring of the heat exchange surface to produce a tray of concave and/or convex surfaces that have a greater resistance to distortion as a result of the reduced but remaining internal pressure or other stresses during use. This complex shape is important in regard to preloading or springing the two halves of the heat exchanger tray together.

The upper and lower surfaces of the heat exchanger may be secured permanently, e.g. by welding using a rolled seam or by a method that permits them being disassembled, e.g. by using bolts, screws, clips or clamps.

Unlike shower heat exchange systems identified in the prior art, including US Patent 4300247, that cannot be easily cleaned as the heat transfer surface in contact with the used shower water is not open or easily exposed. In this invention cleaning requires no special tools, brushes, dismantling or any activity other than the a routine wipe or clean of the shower closure. There is also no need for any installed cleaning apparatus such as moving brushes, rods or plungers as is required in US Patent 4300247. In this invention it is being achieved by using a single pass heat exchanger which uses the exposed surface of the tray as the heat exchange surface that is in turn exposed to the shower drain water. This in turn has been made possible by the low pressure design and tray secured at its edges only.

The heat exchange surface, which would feel cold during normal operation, is preferably covered by a floor plate (or possibly specially designed mat which will be termed the 'Insulating Floor Plate') made of low conductivity material. This lifts the user off the cold surface and allows the shower waste to drain freely below. This Insulating Floor Plate will be lightweight and may be readily manually lifted from the shower enclosure or arranged so that it is hinged and normally resides in the vertical position exposing the shower tray. Alternatively, this cover may reside in the horizontal position, although raised slightly above its seated operating position by a spring mechanism. The weight of the shower occupant will then push the cover into its operating position. This then allows for natural evaporative drying of the shower catch tray. The hinged lifting may be assisted by pretension springs and a damper arrangement within the hinges. In a further enhancement, this may be automatic so that the hinged cover is secured by a magnetic catch or similar mechanism which is released a short period after the shower has been concluded. All of these options allow the Insulating Floor Plate to be lifted by springs in the hinge or similar mechanism allowing the shower tray to be cleaned if necessary and to dry by evaporation in the normal way. It is also possible to trigger the movement of the Insulating Floor Plate from the operation of the shower cubicle door either electronically or by mechanical interlock. These arrangements prevent any smell or mould build-up in the long-term and encourages occasional cleaning of the shower tray/ heat exchange surface.

The thin (typically 1.2 mm or less thick) sheet heat exchanger is protected by an inlet pressure control system. To make this arrangement viable it is necessary to have a pump designed to work with a low suction head. The clean pre-heated water leaving the heat exchanger will be at too low a pressure to meet the optimum requirements for a shower. To overcome this deficiency, it is necessary to install a pump designed to operate with a low suction head (between 0.5 and 3 bar absolute). This pump supplies the pre-heated water through a continuous flow, electrical water heater and on to the shower nozzle at the desired pressure. Inclusion of the pump is also intended to provide optimum control of the shower water flow rate with 'boost' (high pressure) and 'econo' (low pressure) water and energy saving options.

This arrangement can only work at its optimum when supported by an electronic control system that monitors water temperature and not only controls the power supply to the heating elements but also the pump speed. Having control of the pump speed and hence the shower pressure and flow also has advantages in the control of the shower particularly on start up bringing the shower up to the desired temperature as quickly as possible.

There is some inherent instability in the water temperature in a shower of this type. Increasing the shower temperature subsequently increases the heat available and recovered by the heat exchange module, in the absence of a sophisticated control system this further increases the water temperature above the desired level. Reducing the temperature causes the reverse of this effect and 'hunting' or positive feedback can occur. US Patent 4300247 would suffer from this deficiency. This undesirable feature is best managed with an electronic control system with specifically tailored control characteristics. The application of this technology is a feature of this invention.

An electronic control system is capable of giving the shower a number of additional desirable features, as follows:-
Easy touch precise controls that respond quickly.
Temporarily reduced flow during the shower warm-up to ensure that the shower quickly comes up to temperature.
A low flow or "economy" option to reduce both water and energy use.
A high flow/power shower, or boost option
Displaying (graphically if required) the amount of electrical power used and the amount of heat recovered from the heat exchange system.
The digital control system will be measuring the temperature rise and will also be able to monitor the power being used by the heating system from which it will be possible to accurately assess the water flow rate. This data could be used to display a range of useful information such as:-
The quantity of water consumed each time the shower is used; and
A warning when the heat exchange surface should be cleaned or the water supply is inadequate.
The digital control system may also allow the option of "Parental control" with the maximum shower time, quantity of water, energy used, water temperature etc to be set and pass locked into the shower control. This could be useful at sports clubs etc.

The materials used to produce the heat exchanger are not limited to stainless steel. For example, the upper surface of the heat exchanger/tray may be of an alternate metal, material or composite that enhances the rate of heat transfer.

In some configurations it may be desirable to remove the upper layer of the heat exchanger to inspect the interior of the heat exchanger after manufacture for, for example, the removal of any deposits that may build up in the long-term in some applications and may inhibit heat transfer.

It is one of the objectives of the present invention to provide the option of a high flow electric shower and that, in this configuration, it will have a higher power consumption. The efficiency and heat savings are realised in the additional water flow being delivered. Although the benefits of a smaller power supply would be lost, this high flow 'luxury shower' is currently only available from hot water tank supplied showers. However and the total energy saved by the shower of the present invention in this application would be at its highest and much less energy would be used when compared with a high flow shower without an effective heat recovery system.

As a low water pressure is required for the heat exchange tray the pressure at the point of supply to the shower enclosure may be as low as 0.2 bar gauge without disrupting the normal operation of the shower. This, coupled with a modest electrical power supply, is intended to provide a product that can be used in almost any situation without any adjustment or highly skilled installation staff being required. This shower will also be unaffected during its operation by any water pressure variations which often cause problems with conventional showers. The shower of US Patent 4300247 does not have these advantages

This shower in this invention does not require the user to have any specific training or carry out any non-standard activities, e.g. setting valves to a particular position or draining a heat exchanger at the conclusion of the shower. The shower of US Patent 4300247 does require the user to operate values to control the movement of drain water in the heat exchanger.

The shower can, when required by plumbing regulations, also be connected to the water supply via a back flow preventer. Alternatively a small break tank, which may be an integral part of the shower enclosure, can be used. This would effectively control the shower inlet pressure at a constant low pressure and negate the requirements for the inlet pressure control. As such this is an alternative solution to the provision of pressure reducing/control valve assembly and thus may be installed as an integral part of the shower.

An inlet water filter may be desirable to prevent particulate etc entering the shower. A further refinement could also be the inclusion of a pressure relief valve to prevent any damage to the shower in the event of the inlet pressure control system failing.

It should be noted that the shower of the present invention will perform at its highest efficiency when used with an enclosed shower cubicle that has a full door and is enclosed, or partially enclosed, at the top.

This invention has the following advantages over a conventional electric shower:-
a) High water flow conventional electric showers, may use as much as 11kw. An electrical supply of this size requires substantial cable and associated switch gear and in many locations this large size power supply is not available or may only be provided by an expensive upgrade. By recycling much of the energy that would otherwise be lost, the shower of the present invention needs a more modest, lower cost power supply;
b) When there is an adequate power supply to install a conventional high flow electric shower it is of note that, in most residential situations, it is only possible to fit one of these larger electrical showers without over-loading the standard domestic supply to the dwelling. As much of the heat used in the shower of the present invention is recycled, a smaller and cheaper power supply will suffice. Alternatively a second shower may be fitted. This is achieved while maintaining the benefits of high flow hot water shower; and
c) Unlike most conventional electric showers which are generally suitable for use on high pressure (mains water) only, the shower of the present invention is suitable for both high pressure and low pressure (between 15 bar and 0.2 bar gauge) as well as break tank etc. water supply.

The shower tray of the present invention is intended for manufacture on a substantial scale. Each of the components described here are identified as discreet items to clarify their function. It is likely that, prior to manufacture, some of these components, particularly the isolating valve, pressure control system, pump and water heating cartridge will share some of the same housing and, once assembled, will become a smaller number of items.

In the configuration shown in the drawings, it is envisaged that the majority of the components will be below or adjacent to the shower tray heat exchanger. This does not preclude the components being incorporated with the control interface inside the shower or even on the wall adjacent to the shower cubical.

When the water heater is positioned under the shower tray it could be used as a low wattage heater to dry the shower enclosure, particularly when a shower is only to be used infrequently. This is intended to keep the shower dry and hence reduce mould and associated odours that can be a problem with a shower of any type.

The present invention thus provides a high efficiency electric shower that has a heat recovery and water supply system that is an integral part of a shower base and enclosure. This provides a viable commercial product that is suitable for a modest electrical supply and low or high pressure cold water supply.

### Brief Description of the Drawings

Fig. 1 shows an energy-saving high flow shower with a low pressure thin sheet circular tray; and
Fig. 2 is a schematic drawing showing typical connections and water flow; and
Fig. 3 shows a typical detail for a low pressure thin sheet circular tray; and
Fig. 4 shows a heat exchanger tray cover for a circular tray; and
Fig. 5 shows an example of a control interface.

### Description of the Preferred Embodiments

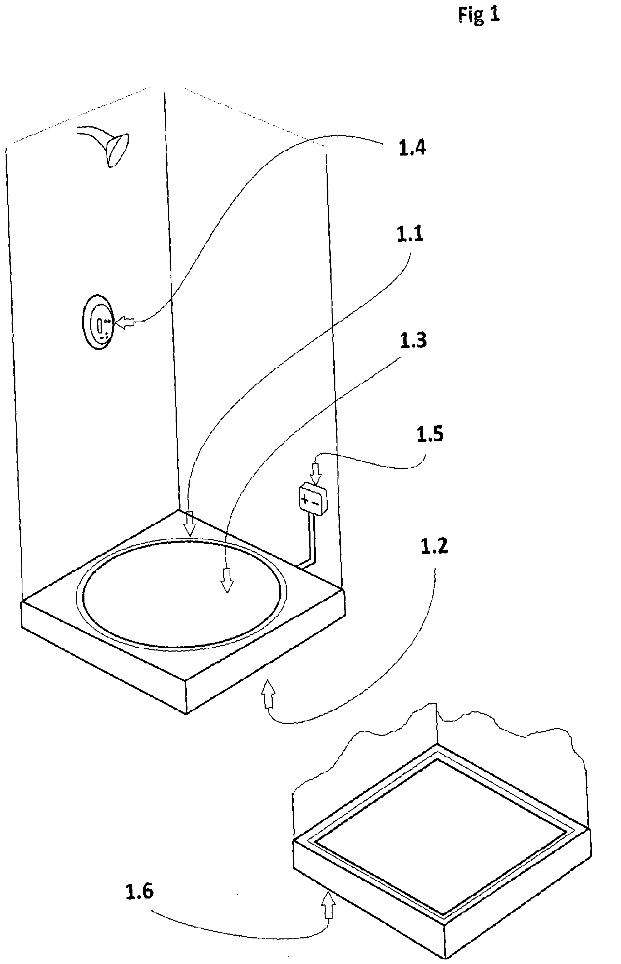

Fig. 1 shows the general arrangement of a typical shower enclosure according to the present invention. The edge of the shower catch tray **1.1** is seen below the Insulating Floor Plate **1.3 1.2** shows the location of other key components (control system, pump, heater, pressure reducing valve etc) beneath the base unit. The control module is shown at **1.4** and the electrical supply point at **1.5**

Although in this figure and in subsequent figures, an example is given with a circular tray, the present invention can be applied with a shower tray of any alternative configuration. **1.6** shows a square tray in which the drain outlet may be central or to one side.

Although not shown in Fig. 1, the top of the shower cubicle is ideally enclosed.

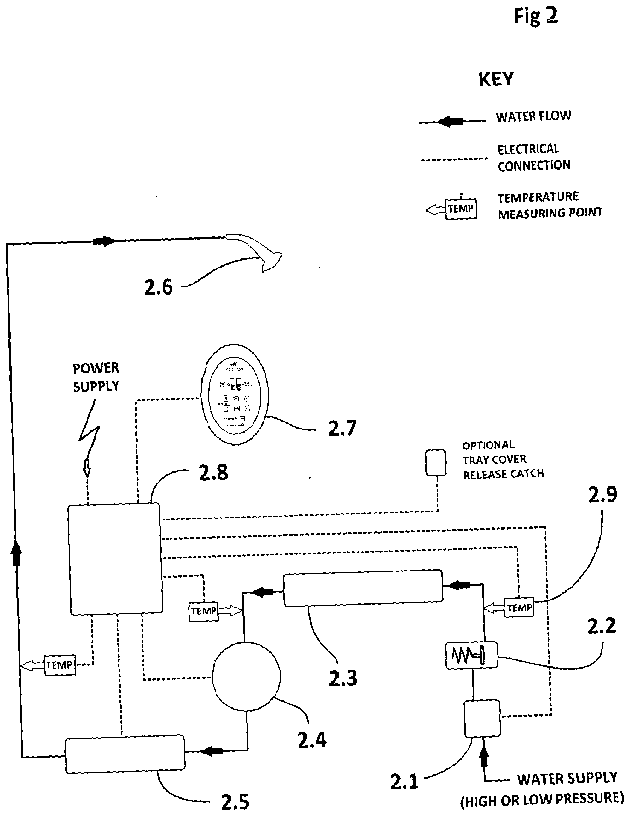

Fig.2 is a schematic layout of the principal components of the shower of the present invention. The cold supply water enters through the electrically actuated isolating valve **2.1** and then directly through the pressure regulating valve **2.2.** This valve is necessary to prevent over-pressurisation of the purposefully designed low pressure thin (typically 1.2mm or less thick) tray heat exchanger **2.3.** The pressure of the water is now too low for a satisfactory shower and some means is also required to regulate the flow of water to the shower head. This is achieved using the pump shown at **2.4.** Any additional heat needed to bring the water up to the desired operating temperature is added by the conventional shower heater **2.5.** The water now flows to the shower head **2.6.** After being used for bathing, the warm shower water passes over, or is guided over, the surface of the heat exchanger **2.3.** The temperature of the water and the quantity flowing from the shower head is regulated according to the parameters entered into the display **2.7** This display unit has a low voltage connection and communicates with the control unit **2.8** that modulates the power to the heater (controls water temp), sets the pump speed (water flow), and provides data to the display unit **2.7.** It also switches on the water flow by activating valve **2.1.** The temperature signals necessary for the control system **2.8** to function are provided by a number of sensors shown at **2.9.**

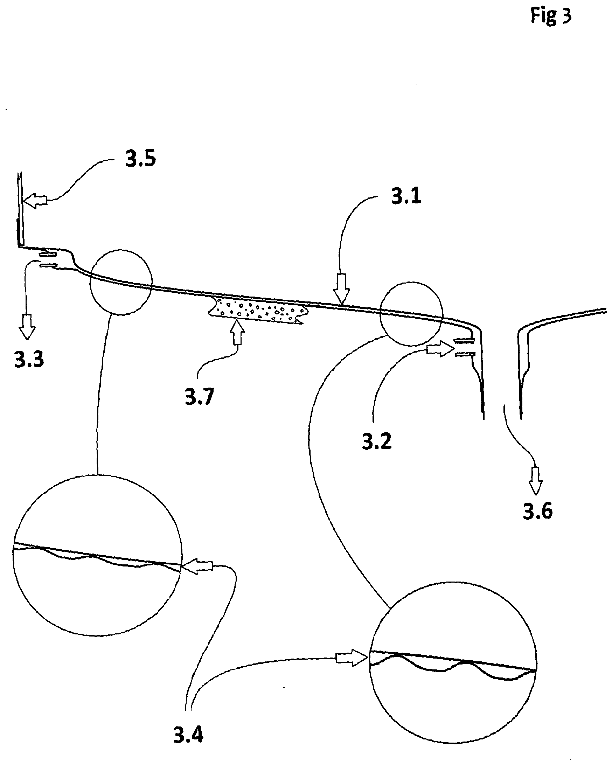

Fig. 3 illustrates the function and construction of the low pressure thin sheet heat exchange module using a circular tray configuration with a central waste outlet. The tray/heat exchange module is shown in a cross-section taken on a radial axis **3.1** The cold water flows in at the port **3.2** entering the space bounded by the two thin stainless steel plates. The first part of this space forms an annular inlet manifold before it passes through the narrow space between the upper and lower plates to the annular discharge manifold and out of the exit port at **3.3.** To ensure an even flow between the plates at every location it is necessary to make sure that there is an even pressure drop across the radial section. This is achieved by a tapered gallery which reduces the clearance between the plates as the radial distance increases. This effect is demonstrated in the enlarged sections shown in **3.4.** and the associated decrease in the height of the dimples separating the two sheets. Alternatively, a spacing assembly, mesh or the like may be used and "sandwiched" between the upper and lower plates. The upper and lower shells have a complex concave shape giving the shells increased mechanical strength. They are joined in an interference fit so that when joined together and secured at their edges they are sprung so that they are in compression at the points of contact or points of contact of any spacing element. The edge of the tray is shown bending up behind the vertical surface of a shower enclosure **3.5. 3.1** shows the exposed heat exchange surface which drains freely due to gravity, so that the used shower water drains away as the shower is in progress and leaves the exposed heat exchange surface free of drain water at the end of the shower. The exposed heat exchange surface is smooth, of high cosmetic appeal and has a surface finish that can be cleaned. The waste water flows to the drain at **3.6.** Although the tray is made of two layers, typically of stainless steel it is still preferable to insulate and necessary to support the tray from below. This is illustrated at **3.7.** The shower Insulating Floor Plate is not shown in Fig. 3.

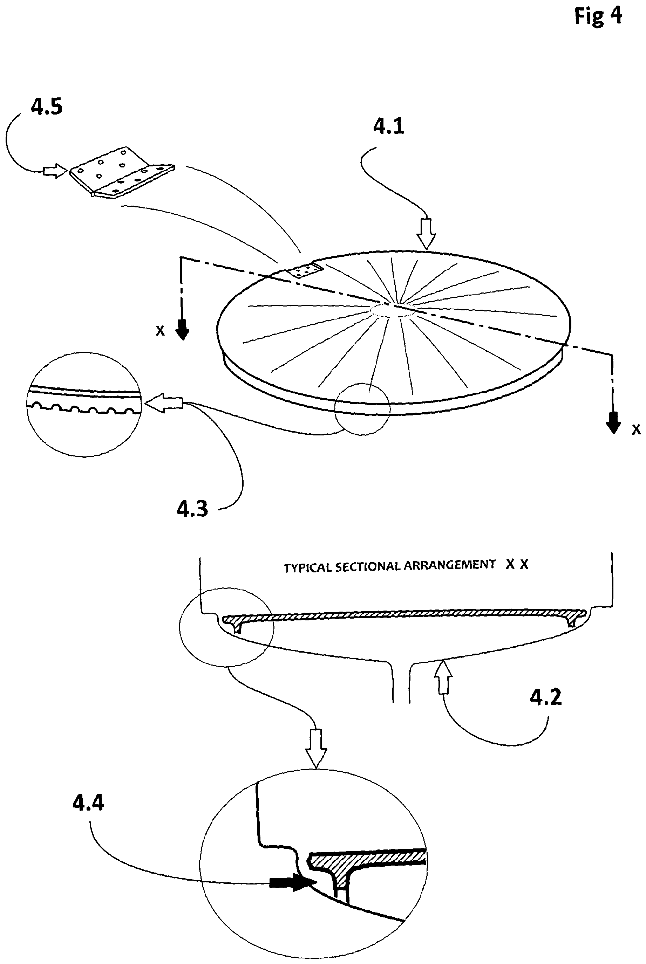

Fig. 4 illustrates the function and construction of the shower Insulating Floor Plate using a circular version as an example. The main body of the Insulating Floor Plate would normally be made of a low thermally conductive typically a plastic or composite material so that it does not feel cold to stand on and is shown in **4.1.** The top surface would be non slip and slightly convex to provide strength and free draining. A section through the tray taken across the diameter at **xx** and is shown in **4.2.**

The edge of the Insulating Floor Plate in this example distributes the flow of warm waste water over the surface of the heat exchange plate. The details of this feature can be seen in the enlargement in **4.3.** This shows the castellation or notches on the lower edge of the circular rib. The detail enlargement in **4.4** depicts the small annular space around the edge of the Insulated Floor Plate that acts as a manifold for the waste water. Although not shown, a similar effect of raised ridges may extend across the entire lower surface of the cover as a series of baffles or channels to guide the waste water.

To allow for ease of cleaning and drying of the tray a hinge may be fitted to the tray. This feature is illustrated in **4.5** and would effectively secure the tray to the shower base or enclosure. A securing catch to hold the cover down and/or pretension springs to lift or partially lift the tray when the shower is not in use could be provided.

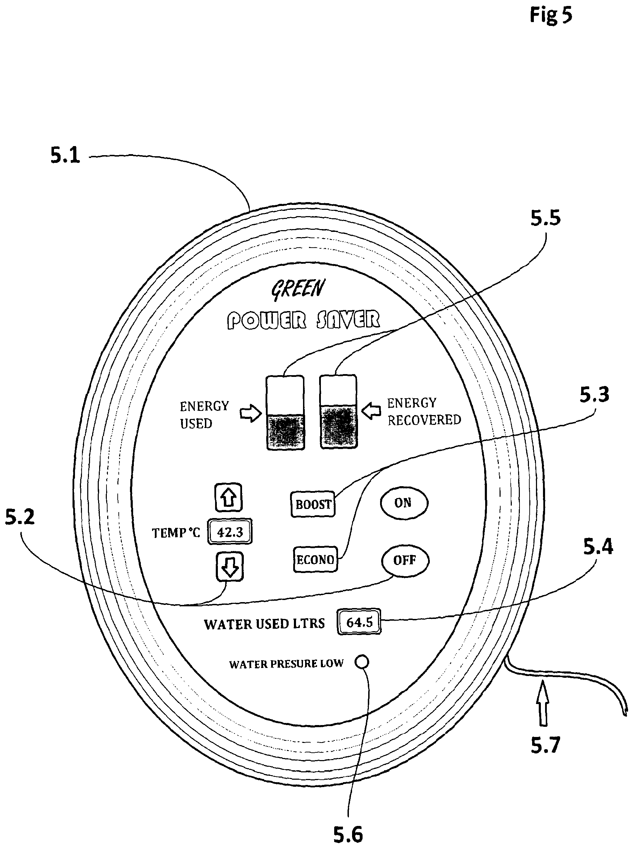

Fig.5 shows an example of the shower control interface **5.1.** Some of the control features are common to any conventional shower. These include the on/off control to start the water flow and a means to adjust the water temperature **5.2.** In this example two flow options are given by the buttons **5.3.**

It is a prerequisite of the present invention control system that it provides a control and monitoring system to regulate both the heating and pumping activities. The data which the control system generates necessarily to perform this function in turn provides the option to include a number of desirable features. Using this monitoring data already available it is possible to infer the quantity of water being used. This information is displayed in this example at **5.4** and the energy both used and recycled displayed at **5.5.** It is, in the same way, possible to ascertain when there is insufficient supply of water and this is used to provide a warning shown at **5.6.** The electrical connection between the display unit and the control unit for both low voltage power supply and data transfer connect at the rear of the display unit and is shown at **5.7.**

## Claims

1. An electric shower which includes a shower head (2.6) to which water is supplied in a single pass via a heater (2.5) and a heat exchanger (2.3) in the form of a catch tray (1.1) at the base of the shower enclosure, **characterised in that** the cold water supply to the heat exchanger (2.3) is via a pressure relief valve (2.2) and a pump (2.4) is between the heat exchanger (2.3) and the shower head (2.6), the heat exchanger (2.3) including spaced upper and lower plates between which the cold water is arranged to flow while the water from the shower head (2.6) passes over the upper plate which serves as a single exposed heat exchange surface, the arrangement being such that all the cold water supplied passes through the heat exchanger (2.3) and is directed to follow the same route from the point of supply to the final drain exit.

2. An electric shower as claimed in Claim 1, **characterised in that** the space between the upper and lower plates of the heat exchanger (2.3) is tapered.

3. An electric shower as claimed in either of the preceding Claims, wherein the heat exchanger (2.3) comprises upper and lower shells joined at their outer edges and at their inner edges; the latter being around the cold water inlet and the waste to drain outlet, and in which the upper and lower shells have a concave shape.

4. An electric shower as claimed in Claim 3, wherein the upper and lower shells of the heat exchanger (2.3) are an interference fit so that, when joined together and secured at their edges, they are sprung so that they are in compression at the point of contact or points of contact of any spacing element.

5. An electric shower as claimed in Claim 4, that has a cold water supply guided into the inlet port (3.2) of the heat exchanger (2.3) and collected at the outlet (3.3) from the heat exchanger (2.3) by manifolds that are an integral part of the heat exchanger (2.3).

6. An electric shower as claimed in any one of the preceding Claims, that incorporates a removable or hinged insulating floor plate (4.1) of low thermal conductivity fitted over the heat exchange surface, the plate (4.1) having protrusions on the lower surface to act as a manifold and/or channels to guide the shower waste water flow across the exposed heat exchange surface.

7. An electric shower as claimed in any one of the preceding Claims, which includes an electronic control system (5.1) that modulates and coordinates the water temperature and flow.

## Patentansprüche

1. Elektrische Dusche, die einen Duschkopf (2.6), dem Wasser in einem Einzeldurchgang mittels eines Heizers (2.5) zugeführt wird, und einen Wärmetauscher (2.3) in Form einer Auffangwanne (1.1) an der Basis der Duschabtrennung umfasst, **dadurch gekennzeichnet, dass** die Kaltwasserzufuhr zu dem Wärmetauscher (2.3) über ein Druckbegrenzungsventil (2.2) erfolgt, und eine Pumpe (2.4) sich zwischen dem Wärmetauscher (2.3) und dem Duschkopf (2.6) befindet, wobei der Wärmetauscher (2.3) beabstandete obere und untere Platten einschließt, zwischen denen das Kaltwasser so angeordnet ist, dass es fließt, während das Wasser aus dem Duschkopf (2.6) über die obere Platte läuft, die als einzelne exponierte Wärmetauscheroberfläche dient, wobei die Anordnung so ist, dass das gesamte zugeführte Kaltwasser durch den Wärmetauscher (2.3) läuft und so geführt wird, dass es demselben Weg von dem Zufuhrpunkt bis zu dem Abflussausgang am Ende folgt.

2. Elektrische Dusche nach Anspruch 1, **dadurch gekennzeichnet, dass** der Raum zwischen der oberen und der unteren Platte des Wärmetauschers (2.3) zulaufend ist.

3. Elektrische Dusche nach einem der vorhergehenden Ansprüche, wobei der Wärmetauscher (2.3) obere und untere Mäntel umfasst, die an ihren Außenrändern und an ihren Innenrändern verbunden sind; wobei letztere um den Kaltwassereinlass und den Auslass des Ablaufs zum Abfluss liegen, und wobei der obere und der untere Mantel eine konkave Form aufweisen.

4. Elektrische Dusche nach Anspruch 3, wobei der obere und untere Mantel des Wärmetauschers (2.3) eine Presspassung bilden, so dass sie, wenn sie miteinander verbunden und an ihren Rändern gesichert sind, federbelastet sind, so dass sie an dem Kontaktpunkt oder den Kontaktpunkten von jedwedem Abstandelement in Kompression sind.

5. Elektrische Dusche nach Anspruch 4, die eine Kaltwasserzufuhr aufweist, die in den Einlassanschluss (3.2) des Wärmetauschers (2.3) geführt wird und an dem Auslass (3.3) aus dem Wärmetauscher (2.3) durch Verteiler gesammelt wird, die ein integraler Teil des Wärmetauschers (2.3) sind.

6. Elektrische Dusche nach einem der vorhergehenden Ansprüche, die eine entfernbare oder mit Scharnier versehende isolierende Bodenplatte (4.1) mit niedriger Wärmeleitfähigkeit beinhaltet, die über die Wärmetauscheroberfläche gepasst ist, wobei die Platte (4.1) Vorsprünge auf der Unterseite aufweist, die als Verteiler und/oder Kanäle wirken, um das Abwasser aus der Dusche so zu führen, dass es über die exponierte Wärmetauscheroberfläche fließt.

7. Elektrische Dusche nach einem der vorhergehenden Ansprüche, die ein elektronisches Steuersystem (5.1) einschließt, welches die Wassertemperatur und den Fluss moduliert und koordiniert.

## Revendications

1. Douche électrique qui comporte un pommeau de douche (2.6) auquel de l'eau est fournie en une seule passe par l'intermédiaire d'un dispositif de chauffage (2.5) et d'un échangeur de chaleur (2.3) sous la forme d'un bac de récupération (1.1) à la base de l'enceinte de douche, **caractérisée en ce que** l'alimentation en eau froide de l'échangeur de chaleur (2.3) se fait par le biais d'une soupape de décharge (2.2) et d'une pompe (2.4) qui se situe entre l'échangeur de chaleur (2.3) et le pommeau de douche (2.6), l'échangeur de chaleur (2.3) comportant des plaques supérieure et inférieure espacées entre lesquelles l'eau est agencée pour circuler alors que l'eau provenant du pommeau de douche (2.6) passe au-dessus de la plaque supérieure qui sert d'unique surface d'échange de chaleur exposée, l'agencement étant tel que toute l'eau froide fournie passe à travers l'échangeur de chaleur (2.3) et est dirigée pour suivre le même parcours depuis le point d'alimentation jusqu'à la sortie d'évacuation finale.

2. Douche électrique selon la revendication 1, **caractérisée en ce que** l'espace entre les plaques supérieure et inférieure de l'échangeur de chaleur (2.3) est effilé.

3. Douche électrique selon l'une ou l'autre des revendications précédentes, dans laquelle l'échangeur de chaleur (2.3) comprend des coques supérieure et inférieure reliées à leurs bords externes et à leurs bords internes ; ces derniers se situant autour de l'entrée d'eau froide et de la sortie d'évacuation, et dans laquelle les coques supérieure et inférieure ont une forme concave.

4. Douche électrique selon la revendication 3, dans laquelle les coques supérieure et inférieure de l'échangeur de chaleur (2.3) forment un ajustement serré de telle sorte que, lorsqu'elles sont réunies et fixées à leurs bords, elles sont sous tension de telle sorte qu'elles sont en compression au point de contact ou aux points de contact de tout élément d'espacement.

5. Douche électrique selon la revendication 4, qui a une alimentation en eau froide guidée à l'intérieur de l'orifice d'entrée (3.2) de l'échangeur de chaleur (2.3) et collectée à la sortie (3.3) de l'échangeur de chaleur (2.3) par des collecteurs qui font partie intégrante de l'échangeur de chaleur (2.3).

6. Douche électrique selon l'une quelconque des revendications précédentes, qui intègre une plaque de sol isolante amovible ou à charnière (4.1) de faible conductivité thermique installée sur la surface d'échange de chaleur, la plaque (4.1) ayant des saillies sur la surface inférieure agissant comme un collecteur et/ou des canaux pour guider la circulation d'eau de douche usée à travers la surface d'échange de chaleur exposée.

7. Douche électrique selon l'une quelconque des revendications précédentes, qui comporte un système de commande électronique (5.1) qui module et coordonne la température et la circulation de l'eau.
